(19) Europäisches Patentamt
European Patent Office
Office européen des brevets

(11) **EP 4 691 809 A1**

(12) **EUROPEAN PATENT APPLICATION**
published in accordance with Art. 153(4) EPC

(43) Date of publication:
**11.02.2026 Bulletin 2026/07**

(21) Application number: **24777515.8**

(22) Date of filing: **02.02.2024**

(51) International Patent Classification (IPC):
***B60G 17/015*** ***(2006.01)***

(52) Cooperative Patent Classification (CPC):
**B60G 17/015; B60G 17/02; B60G 17/08**

(86) International application number:
**PCT/CN2024/075567**

(87) International publication number:
**WO 2024/198721 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 CN 202310384048**

(71) Applicant: **BYD Company Limited Shenzhen, Guangdong 518118 (CN)**

(72) Inventors:
• **LIAN, Yubo**
  **Shenzhen, Guangdong 518118 (CN)**
• **LIAO, Yinsheng**
  **Shenzhen, Guangdong 518118 (CN)**
• **ZHANG, Hongzhou**
  **Shenzhen, Guangdong 518118 (CN)**
• **SUN, Zhongbo**
  **Shenzhen, Guangdong 518118 (CN)**
• **LI, Xie**
  **Shenzhen, Guangdong 518118 (CN)**

(74) Representative: **Mathys & Squire**
**The Shard**
**32 London Bridge Street**
**London SE1 9SG (GB)**

(54) **CONTROL METHOD FOR VEHICLE, AND ACTIVE SUSPENSION SYSTEM, SUSPENSION CONTROL APPARATUS AND VEHICLE**

(57) A control method for a vehicle (100), an active suspension system (12), a suspension control apparatus (64), and a vehicle (100) are provided. The control method for a vehicle (100) includes: obtaining a frequency signal within a first frequency interval of an audio signal; and controlling an active suspension system (12) of the vehicle (100) to perform a rhythmic action based on the frequency signal.

```
┌──────────────────────────────────────────────┐
│  Obtain a frequency signal within a first      │
│  frequency interval of an audio signal         │
└──────────────────────────────────────────────┘
                      │
                      ▼
┌──────────────────────────────────────────────┐
│  Control an active suspension system of a      │
│  vehicle to perform a rhythmic action based    │
│  on the frequency signal                       │
└──────────────────────────────────────────────┘
```

FIG. 1

**Description**

**CROSS-REFERENCE TO RELATED APPLICATIONS**

This application claims priority to and benefits of Chinese Patent Application No. 2023103840486, filed with the China National Intellectual Property Administration on March 31, 2023, which is incorporated herein by reference in its entirety.

**TECHNICAL FIELD**

This application relates to the field of vehicle technologies, and in particular, to a control method for a vehicle, an active suspension system, a suspension control apparatus, and a vehicle.

**BACKGROUND**

With the continuous development of vehicle intelligence, electrification, and Internet connectivity in China, vehicles have not only served as transportation tools integrated into daily life, but have also provided more personalized entertainment functions and intelligent functions that are being implemented and promoted. For example, vehicles can implement interaction with users through voice, gestures, and the like. However, in these interaction manners, the entire vehicle is basically in a stationary state, failing to meet users' more personalized entertainment requirements.

**SUMMARY**

Implementations of this application provide a control method for a vehicle, an active suspension system, a suspension control apparatus, and a vehicle.
An implementation of this application provides a control method for a vehicle, including:

obtaining a frequency signal within a first frequency interval of an audio signal; and
controlling an active suspension system of the vehicle to perform a rhythmic action based on the frequency signal.

According to the control method for a vehicle, the frequency signal within the first frequency interval of the audio signal is obtained, and the active suspension system of the vehicle is controlled to perform the rhythmic action based on the frequency signal. In this way, the vehicle can use the active suspension system to perform rhythmic movement with music, thereby meeting more personalized entertainment requirements of a user, and improving user experience.
An implementation of this application provides an active suspension system, including at least one suspension structure, where the suspension structure includes a motor and a damper, and the motor is configured to adjust a rotation direction and a rotation speed based on an audio signal, to enable the damper to perform rhythmic movement with the audio signal.
In the active suspension system, the motor is configured to adjust the rotation direction and the rotation speed based on the audio signal, to enable the damper to perform the rhythmic movement with the audio signal. In this way, a vehicle can use the active suspension system to perform the rhythmic movement with music, thereby meeting more personalized entertainment requirements of a user, and improving user experience.
An implementation of this application provides a suspension control apparatus, including a controller, where the controller is configured to be electrically connected to an active suspension system, and the controller is configured to implement the steps of the control method of the foregoing implementation.
An implementation of this application provides a vehicle, including the active suspension system of the foregoing implementation and/or the suspension control apparatus of the foregoing implementation.
The suspension control apparatus and the vehicle can use the active suspension system to enable the vehicle to perform rhythmic movement with music, thereby meeting more personalized entertainment requirements of a user, and improving user experience.
Some of additional aspects and advantages of this application are provided in the following descriptions, and some of the additional aspects and the advantages become apparent from the following descriptions or are learned from practice of this application.

**BRIEF DESCRIPTION OF DRAWINGS**

The foregoing and/or additional aspects and advantages of this application will become apparent and readily understood from the descriptions of the implementations with reference to the following accompanying drawings.

FIG. 1 is a schematic flowchart of a control method for a vehicle according to an implementation of this application;

FIG. 2 and FIG. 3 are schematic diagrams of structures of a vehicle according to an implementation of this application;

FIG. 4 is a schematic diagram of a structure of a damper according to an implementation of this application;

FIG. 5 is a schematic diagram of a principle of a damper according to an implementation of this application;

FIG. 6 is a schematic diagram of an orientation of a vehicle according to an implementation of this application; and

FIG. 7 is a schematic diagram of a model of a vehicle according to an implementation of this application.

Descriptions of reference numerals of main elements:

vehicle 100; active suspension system 12; vehicle body 14; wheel 16; suspension structure 18; elastic element 20; damper 24; fluid pump 26; motor 28; outer cylinder assembly 30; piston rod 32; piston assembly 34; upper cavity 36; lower cavity 38; first port 40; second port 42; fluid branch 44; first flow path 46; second flow path 48; first adjustment assembly 50; second adjustment assembly 52; first proportional valve 54; first one-way valve 56; second proportional valve 58; second one-way valve 60; energy recovery system 62; suspension control apparatus 64; and controller 66.

## DESCRIPTION OF EMBODIMENTS

The following describes in detail implementations of this application, examples of the implementations are shown in the accompanying drawings, and identical or similar reference numerals throughout represent identical or similar elements or elements having identical or similar functions. The following implementations described with reference to the accompanying drawings are exemplary, and are intended merely to explain this application, and will not be understood as a limitation on this application.

In the descriptions of this application, it should be noted that, unless otherwise explicitly specified and defined, the terms "mounting", "interconnection", and "connection" will be understood in a broad sense, for example, may be fixed connections, detachable connections, or integrated connections, may be mechanical connections or electrical connections, may be direct connections or indirect connections by using an intermediate medium, or may be internal communication between two elements or an interaction relationship between two elements. A person of ordinary skill in the art may understand specific meanings of the foregoing terms in this application according to a specific situation.

The disclosure of this specification provides many different implementations or examples for implementing different structures of this application. To simplify the disclosure of this application, components and arrangements of specific examples are described herein. Certainly, the components and the arrangements are merely examples and are not intended to limit this application. In addition, reference numbers and/or reference letters may be repeated in different examples in this application, and such repetition is for simplification and clarity purposes, and does not indicate a relationship between the various implementations and/or arrangements discussed. In addition, this application provides examples of various specific processes and materials, but a person of ordinary skill in the art may be aware of application of another process and/or use of another material.

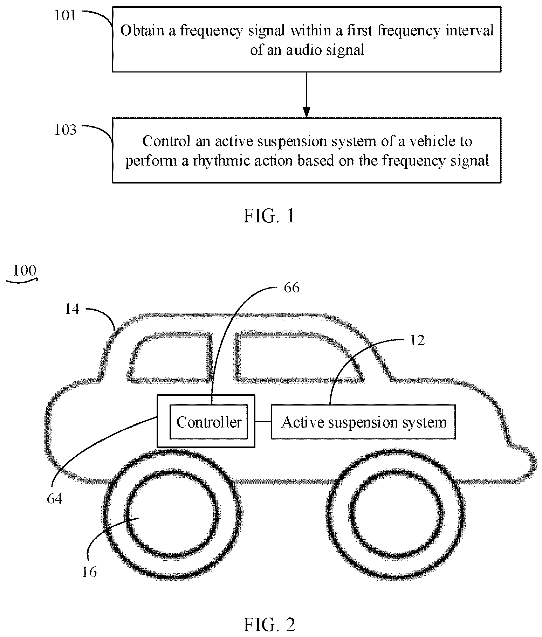

Referring to FIG. 1 and FIG. 2, an implementation of this application provides a control method for a vehicle 100. The control method includes the following steps.

Step 101: obtaining a frequency signal within a first frequency interval of an audio signal.

Step 103: controlling an active suspension system 12 of the vehicle 100 to perform a rhythmic action based on the frequency signal.

According to the control method for a vehicle 100, the frequency signal within the first frequency interval of the audio signal is obtained, and the active suspension system 12 of the vehicle 100 is controlled to perform the rhythmic action based on the frequency signal. In this way, the vehicle 100 can use the active suspension system 12 to implement the control method for the vehicle 100 to perform rhythmic movement with music, thereby meeting more personalized entertainment requirements of a user, and improving user experience.

Specifically, the audio signal may be from music playing software of an in-vehicle entertainment system, may be from another device in an environment in which the vehicle is located, or may be from an audio device that is communicatively connected to the vehicle 100. The audio device includes but is not limited to a mobile phone, a tablet computer, a wearable smart device (a smart watch, a smart helmet, smart glasses, or the like), or a personal computer. The vehicle 100 may be connected to the audio device by using a wireless network. In an implementation, an audio signal obtaining request may be sent to the music playing software of the in-vehicle entertainment system or the audio device. The audio signal obtaining request includes a frequency interval of a required audio signal, a required frequency band of the frequency interval, and a corresponding amplitude.

A size of the first frequency interval is not specifically limited in this application. The first frequency interval may be any frequency interval of a specified audio signal. In an implementation, the first frequency interval includes one or any combination of a low-frequency interval, an intermediate-frequency interval, and a high-frequency interval.

For example, a low-frequency signal of the audio signal may be obtained, to control the active suspension system of the vehicle to perform the rhythmic action based on the low-frequency signal. For another example, an intermediate-frequency signal of the audio signal may be obtained, to control the active suspension system of the vehicle to perform the rhythmic action based on the intermediate-frequency signal.

In this way, the first frequency interval may be selected as required, thereby flexibly adapting to different scenario requirements or user requirements.

In an implementation of this application, the first frequency interval is not limited to the low-frequency interval and the intermediate-frequency interval, and may alternatively be a frequency interval in another frequency range.

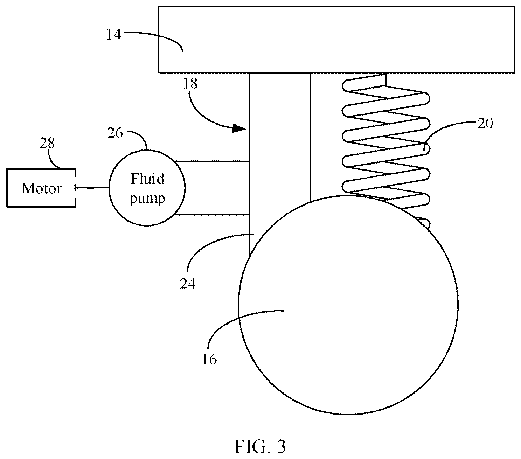

Referring to FIG. 2 and FIG. 3, the vehicle 100 includes a vehicle body 14 and a plurality of wheels 16. The wheel 16 is connected to a swing arm and a steering knuckle. The active suspension system 12 may include at least one suspension structure 18, and the suspension structure 18 may be fastened to the swing arm or the steering knuckle, to be connected to the wheel 16. Each wheel 16 may be connected to the vehicle body 14 by using one suspension structure 18. The active suspension system 12 may independently control each suspension structure 18 to perform the rhythmic action.

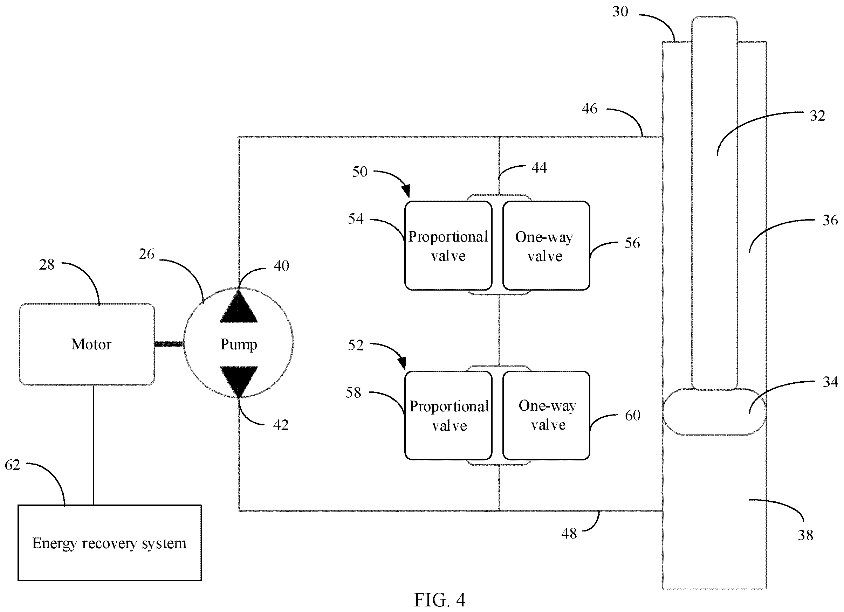

Referring to FIG. 3 and FIG. 4, in an implementation, each suspension structure 18 includes an elastic element 20, a damper 24, a fluid pump 26, and a motor 28. The damper 24 includes an outer cylinder assembly 30, a piston rod 32, and a piston assembly 34. An upper cavity 36 and a lower cavity 38 are disposed in the outer cylinder assembly 30, the upper cavity 36 and the lower cavity 38 each are filled with a fluid. The piston rod 32 is connected to the piston assembly 34 and the vehicle body 14. The piston assembly 34 separates the upper cavity 36 from the lower cavity 38. The fluid pump 26 may be a two-way fluid pump 26. The fluid pump 26 has a first port 40 and a second port 42. The first port 40 and the second port 42 are respectively connected to the upper cavity 36 and the lower cavity 38. The motor 28 may drive the fluid pump 26 to operate. For example, the motor 28 drives, when rotating in a first direction, the fluid pump 26 to deliver the fluid from the lower cavity 38 to the upper cavity 36, and the motor 28 drives, when rotating in a second direction, the fluid pump 26 to deliver the fluid from the upper cavity 36 to the lower cavity 38. The first direction is opposite to the second direction. The motor 28 may be a three-phase alternating current motor 28.

An upper end of the piston rod 32 and an upper end of the elastic element 20 may be connected to the vehicle body 14, and a lower end of the piston rod 32 and a lower end of the elastic element 20 may be connected to the swing arm or the steering knuckle, to be connected to the wheel 16, so that the damper 24 and the elastic element 20 are connected between the vehicle body 14 and the wheel 16.

When the fluid in the lower cavity 38 is delivered to the upper cavity 36, the piston assembly 34 is pressed down by a pressure of the fluid in the upper cavity 36, and the piston assembly 34 drives the piston rod 32 to move downward, so that the vehicle body 14 presses down the elastic element 20, thereby reducing a height of the vehicle body 14. The elastic element 20 is compressed to store elastic potential energy. The vehicle body 14 may be maintained at a current height.

When the fluid in the upper cavity 36 is delivered to the lower cavity 38, the piston assembly 34 is pushed upward by a pressure of the fluid in the lower cavity 38, and the piston assembly 34 drives the piston rod 32 to move upward, so that the piston rod 32 accelerates the vehicle body 14 upward. The elastic potential energy stored by the elastic element 20 is released, so that the elastic element 20 accelerates the vehicle body 14 upward. Under the action of double acceleration of the damper 24 and the elastic element 20, the vehicle body 14 is driven upward to increase the height of the vehicle body 14. In addition, the vehicle body 14 may be maintained at a current height.

It will be understood that, in another implementation, the suspension structure 18 is not limited to the foregoing structure, and may alternatively be another suspension structure 18, to ensure that the height of the vehicle body 14 can be adjusted (increase or reduce the height of the vehicle body 14).

In some implementations, 103 includes:

controlling the active suspension system 12 of the vehicle 100 to perform the rhythmic action based on an amplitude of the frequency signal.

In a specific frequency interval, different amplitudes indicate different loudness. In this way, the rhythmic action is performed based on the amplitude of the frequency signal, to implement rhythmic movement based on a volume of a sound. In this way, the sound is more in line with direct feeling of the sound by human ears, thereby improving user experience

For example, in an optional implementation, the amplitude of the frequency signal is related to a change amplitude when the height of the vehicle body 14 is adjusted during the rhythmic action. For example, a larger amplitude of the frequency signal indicates a larger amplitude for adjusting the height of the vehicle body 14 when the active suspension system 12 performs the rhythmic action, and a smaller amplitude of the frequency signal indicates a smaller amplitude for adjusting the height of the vehicle body 14 when the active suspension system 12 performs the rhythmic action.

Amplitude division of the frequency signal may be implemented based on a plurality of preset amplitude ranges. Each preset amplitude range corresponds to one amplitude level. Therefore, a plurality of amplitude levels of the frequency signal may be obtained. A higher amplitude level indicates a larger adjustment for the height of the vehicle body 14. A correspondence between the amplitude level of the frequency signal and the height of the vehicle body 14 may be pre-calibrated and stored. A target height to which the vehicle body 14 needs to be adjusted may be determined based on an observed amplitude level of the frequency signal and the foregoing correspondence.

The active suspension system 12 controls, based on the target height to which the vehicle body 14 needs to be adjusted, a rotation direction and/or a rotation speed (rotation speed) of the motor 28 to perform the rhythmic action.

In some implementations, an action type of the rhythmic action is one or more of a single-wheel rhythmic action, a single-side rhythmic action, a dual-side rhythmic action, a diagonal rhythmic action, and an all-wheel rhythmic action. The rhythmic action may include a jump action and/or a press-down action.

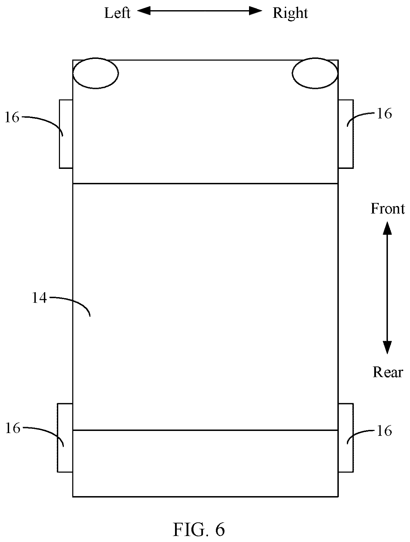

The single-wheel rhythmic action may mean that one of a plurality of suspension structures 18 performs the rhythmic action, for example, performs the jump action and/or the press-down action. Referring to FIG. 6, for example, for the vehicle 100 having four wheels 16, each of the wheels 16 is connected to one suspension structure 18, and the single-wheel rhythmic action may mean that a left front suspension structure 18 performs the rhythmic action, a left rear suspension structure 18 performs the rhythmic action, a right front suspension structure 18 performs the rhythmic action, or a right rear suspension structure 18 performs the rhythmic action.

The rhythmic action may mean that, for example, the suspension structure 18 performs the jump action and/or press-down action.

The single-side rhythmic action may mean that suspension structures 18 of the plurality of suspension structures 18 that are located on a same side perform the rhythmic action, for example, perform the jump action and/or the press-down action. Optionally, a same rhythmic action or opposite rhythmic actions may be performed on the same side. The same action may mean that all the suspension structures 18 on the same side perform the jump action, or all the suspension structures 18 on the same side perform the press-down action. The opposite actions mean that one of two suspension structures 18 on the same side performs the jump action to raise the vehicle body 14, and the other suspension structure 18 performs the press-down action to lower the vehicle body 14. Referring to FIG. 6, for example, the vehicle 100 has a front side, a rear side, a left side, and a right side. The single-side rhythmic action may mean that suspension structures 18 on the left side (including a left front suspension structure 18 and a left rear suspension structure 18) perform the jump action and/or the press-down action (briefly referred to as a left-side rhythmic action) to raise and/or lower the vehicle body 14, may mean that suspension structures 18 on the right side (including a right front suspension structure 18 and a right rear suspension structure 18) perform the jump action and/or the press-down action (briefly referred to as a right-side rhythmic action) to raise and/or lower the vehicle body 14, may mean that suspension structures 18 on the front side (including a left front suspension structure 18 and a right front suspension structure 18) perform the jump action and/or the press-down action (briefly referred to as a front-side rhythmic action) to raise and/or lower the vehicle body 14, or may mean that suspension structures 18 on the rear side (including a left rear suspension structure 18 and a right rear suspension structure 18) perform the jump action and/or the press-down action (briefly referred to as a rear-side rhythmic action) to raise and/or lower the vehicle body 14.

The dual-side rhythmic action may mean that suspension structures 18 located on a first side and suspension structures 18 located on a second side in the plurality of suspension structures 18 alternately perform the jump action and/or the press-down action. The rhythmic action on the first side and the rhythmic action on the second side may be opposite actions or a same action. For example, the vehicle 100 has a front side, a rear side, a left side, and a right side. The dual-side rhythmic action may mean that suspension structures 18 on the left side and suspension structures 18 on the right side alternately perform the jump action and/or the press-down action (for example, jump on the left side and press-down on the right side or press-down on the left side and jump on the right side) (briefly referred to as a left-right-side rhythmic action), or suspension structures 18 on the front side and suspension structures 18 on the rear side alternately perform the jump action and/or the press-down action (for example, jump on the front side and press-down on the rear side, or press-down on the front side and jump on the rear side) (briefly referred to as a front-rear-side rhythmic action).

The diagonal rhythmic action may mean that suspension structures 18 of the plurality of suspension structures 18 that are located at diagonal positions perform the jump action and/or the press-down action. Opposite rhythmic actions or a same rhythmic action may be performed on diagonal sides. For example, the vehicle 100 has a front side, a rear side, a left side, and a right side. The diagonal rhythmic action may mean that two diagonal suspension structures 18 located on a left front side and a right rear side perform the jump action and/or the press-down action (briefly referred to as a left front-right rear rhythmic action) (for example, jump on the left front side and press-down on the right rear side, or press-down on the left front side and jump on the right rear side), or suspension structures 18 on a right front side and a left rear side perform the jump action and/or the press-down action (briefly referred to as a right front-left rear rhythmic action) (for example, jump on the right front side and press-down on the left rear side, or press-down on the right front side and jump on the left rear side).

The all-wheel rhythmic action may mean that the plurality of suspension structures 18 concurrently perform the jump action and/or the press-down action. For example, the plurality of suspension structures 18 perform the press-down action to lower the vehicle body 14, or the plurality of suspension structures 18 perform the jump action to raise the vehicle body 14.

In some implementations, the action type of the rhythmic action is determined based on an amplitude level of the frequency signal. In this way, a specific type of the rhythmic action may be determined.

Specifically, the amplitude of the frequency signal varies with time. In an implementation, amplitude level division may be implemented based on a plurality of preset amplitude ranges, one preset amplitude range corresponds to one amplitude level, and a larger amplitude within the preset amplitude range indicates a higher amplitude level. A maximum amplitude in the frequency signal may be extracted, and a preset amplitude range in which the maximum amplitude in the frequency signal is located is determined, to determine the amplitude level of the frequency signal.

Different amplitude levels may correspond to different rhythmic action types. In an example, there are five amplitude levels 1, 2, 3, 4, and 5. When the amplitude level is 1, a corresponding rhythmic action type is the single-wheel rhythmic action. When the amplitude level is 2, a corresponding rhythmic action type is the single-side rhythmic action. When the amplitude level is 3, a corresponding rhythmic action type is the dual-side rhythmic action. When the amplitude level is 4, a corresponding rhythmic action type is the diagonal rhythmic action. When the amplitude level is 5, a corresponding rhythmic action type is the all-wheel rhythmic action. It may be understood that the foregoing examples are merely intended to facilitate understanding of this application, and will not be understood as a limitation on this application.

In some implementations, the frequency signal includes a plurality of frequency bands, and the amplitude level is determined based on an amplitude of each of the plurality of frequency bands. In this way, the amplitude level of the frequency signal may be determined based on the amplitude of each of the plurality of frequency bands.

Specifically, the first frequency interval may be divided into a plurality of frequency bands. In an optional implementation, a maximum amplitude of each frequency band may be extracted, and the maximum amplitude of each frequency band is compared with the plurality of preset amplitude ranges to obtain an amplitude level of each frequency band. The amplitude level may be associated with the action type in advance to form an association relationship, and an observed amplitude level of each frequency band is compared with the foregoing association relationship to obtain the rhythmic action type.

It may be understood that, in another implementation, the amplitude level of each frequency band may not be limited to an amplitude level corresponding to the maximum amplitude, and may alternatively be an amplitude level corresponding to a minimum amplitude in a plurality of amplitudes, or when a plurality of amplitudes are sorted in a specific order, an amplitude level corresponding to an amplitude in a preset ranking is used as the amplitude level of each frequency band. This is not specifically limited herein.

In some implementations, the frequency signal includes a plurality of frequency bands, and the rhythmic action includes a rhythmic sub-action corresponding to each of the plurality of frequency bands.

It may be understood that each of the plurality of frequency bands may correspond to one rhythmic sub-action, or may correspond to a plurality of rhythmic sub-actions.

The frequency signal may further include another frequency band in addition to the plurality of frequency bands, and another frequency band may correspond to no rhythmic sub-action.

In an example, the first frequency interval is divided into four frequency bands, which are respectively frequency bands 1, 2, 3, and 4. The frequency band 1 may correspond to a first rhythmic sub-action, the frequency band 2 may correspond to a second rhythmic sub-action, the frequency band 3 may correspond to a third rhythmic sub-action, and the frequency band 4 may correspond to a fourth rhythmic sub-action.

In an implementation, the first rhythmic sub-action, the second rhythmic sub-action, the third rhythmic sub-action, and the fourth rhythmic sub-action are respectively four different single-wheel rhythmic actions, for example, respectively a left front rhythmic action, a right front rhythmic action, a left rear rhythmic action, and a right rear rhythmic action.

In an implementation, the first rhythmic sub-action, the second rhythmic sub-action, the third rhythmic sub-action, and the fourth rhythmic sub-action are respectively four different single-side rhythmic actions, for example, respectively a left-side rhythmic action, a right-side rhythmic action, a front-side rhythmic action, and a rear-side rhythmic action.

In an implementation, the first rhythmic sub-action and the second rhythmic sub-action constitute one dual-side rhythmic action, and the third rhythmic sub-action and the fourth rhythmic sub-action constitute another dual-side rhythmic action. For example, the first rhythmic sub-action and the second rhythmic sub-action constitute a left-right-side rhythmic action, and the third rhythmic sub-action and the fourth rhythmic sub-action constitute a front-rear-side rhythmic action.

In an implementation, the first rhythmic sub-action and the second rhythmic sub-action constitute one diagonal rhythmic action, and the third rhythmic sub-action and the fourth rhythmic sub-action constitute another diagonal rhythmic action. For example, the first rhythmic sub-action and the second rhythmic sub-action constitute a left front-right rear rhythmic action, and the third rhythmic sub-action and the fourth rhythmic sub-action constitute a right front-left rear rhythmic action.

In an implementation, the first rhythmic sub-action and the second rhythmic sub-action constitute an all-wheel rhythmic action implementing press-down, and the third rhythmic sub-action and the fourth rhythmic sub-action constitute an all-wheel rhythmic action implementing jump.

In some implementations, the plurality of frequency bands include a first frequency band, and a first rhythmic sub-action corresponding to the first frequency band is determined based on one or more of an amplitude of the first frequency band, a frequency of the first frequency band, and a drumbeat position of the first frequency band. In this way, a proper parameter may be selected as required to specifically determine the first rhythmic sub-action.

The first frequency band may be any frequency band in the plurality of frequency bands.

In an optional embodiment, an adjustment height of the vehicle body 14, that is, an amplitude of the first rhythmic sub-action, during the first rhythmic sub-action may be determined based on the amplitude of the first frequency band. For example, when an amplitude level of the first frequency band is 1, the adjustment height of the vehicle body 14 is ±10 mm.

In an optional embodiment, an action frequency of the first rhythmic sub-action may be determined based on the frequency of the first frequency band. Specifically, in an implementation, an average frequency of the frequency band may be associated with the action frequency of the rhythmic sub-action in advance to form an association relationship. An observed average frequency of the first frequency band is compared with the association relationship to obtain the action frequency of the first rhythmic sub-action.

In an optional embodiment, action timing of the first rhythmic sub-action may be determined based on the drumbeat position of the first frequency band. Specifically, the drumbeat position of the first frequency band may be obtained. When the drumbeat position appears, a corresponding active suspension system 12 is controlled to perform the first rhythmic sub-action, and an action amplitude and the action frequency may be obtained in the foregoing two manners.

In an implementation, the first rhythmic sub-action is determined based on the amplitude of the first frequency band, the action frequency may be a preset frequency, and the action timing may be any moment at which music is played to the first frequency band.

In an implementation, the first rhythmic sub-action is determined based on the frequency of the first frequency band. The action amplitude may be a preset amplitude, and the action timing may be any moment at which music is played to the first frequency band.

In an implementation, the first rhythmic sub-action is determined based on the drumbeat position of the first frequency band. The action frequency may be a preset frequency, and the action amplitude may be a preset amplitude.

In an implementation, the first rhythmic sub-action is determined based on the amplitude of the first frequency band and the frequency of the first frequency band, and the action timing may be any moment at which music is played to the first frequency band.

In an implementation, the first rhythmic sub-action is determined based on the frequency of the first frequency band and the drumbeat position of the first frequency band. The action amplitude may be a preset amplitude.

In an implementation, the first rhythmic sub-action is determined based on the amplitude of the first frequency band and the drumbeat position of the first frequency band. The action frequency may be a preset frequency.

In an implementation, the first rhythmic sub-action is determined based on the amplitude of the first frequency band, the frequency of the first frequency band, and the drumbeat position of the first frequency band.

In some implementations, an action parameter of the first rhythmic sub-action includes one or more of a vibration height, a vibration frequency, and a rhythmic action sequence. In this way, the action parameter may be set to implement the first rhythmic sub-action.

Specifically, the vibration height may refer to adjusting the vehicle body 14 to the target height. The vibration height may be calibrated based on a zero-position height. The zero-position height is set in a plurality of manners.

In an implementation, the zero-position height may be a position at which the piston assembly 34 of the suspension structure 18 is located when the vehicle 100 is stationary. It may be understood that the zero-position height may also be calibrated by using, not limited to the piston assembly 34, another component of the suspension structure 18. For example, if the vibration height is 10 mm, it indicates that the vehicle body 14 is located at a height that is 10 mm higher than the zero-position height. If the vibration height is -10 mm, it indicates that the vehicle body 14 is located at a height that is 10 mm lower than the zero-position height.

In an implementation, the zero-position height may be a limit height for the suspension structure 18 to adjust to lower the vehicle 100. For example, if the vibration height is 10 mm, it indicates that the vehicle body 14 is located at a height of 10 mm based on the zero-position height. If the vibration height is 20 mm, it indicates that the vehicle body 14 is located at a height of 20 mm based on the zero-position height.

In an implementation, the zero-position height may be a limit height for the suspension structure 18 to adjust to raise the vehicle 100. For example, if the vibration height is -10 mm, it indicates that the vehicle body 14 is located at a height of -10 mm based on the zero-position height. If the vibration height is -20 mm, it indicates that the vehicle body 14 is located at a height of -20 mm based on the zero-position height.

In an implementation, the zero-position height may alternatively be a ground height. For example, if the vibration height is 280 mm, it indicates that the vehicle body 14 is located at a height of 280 mm based on the ground height. If the vibration height is 300 mm, it indicates that the vehicle body 14 is located at a height of 300 mm based on the ground height.

In some implementations, the control method further includes:
determining a working mode of the vehicle 100.

In this way, rhythmic movement may be performed based on the working mode of the vehicle 100.

Specifically, the vehicle 100 may have at least one working mode. A user may select the working mode in a graphical user interface of an in-vehicle infotainment system in the vehicle, a user may select the working mode of the vehicle 100 on a terminal device communicatively connected to the vehicle 100, or the working mode of the vehicle 100 may be a default working mode. This is not specifically limited herein. The terminal device includes but is not limited to a mobile phone, a tablet computer, a wearable smart device (a smart watch, a smart helmet, smart glasses, or the like), or a personal computer.

In some implementations, working modes include a self-show mode, a leading mode, and a following mode, and may further include a lulling mode, a choreographing mode, and the like.

In this way, the working mode may be determined from a plurality of modes.

Specifically, a plurality of modes such as the self-show mode, the leading mode, the following mode, the lulling mode, the choreographing mode, a viewing mode, and a gaming mode may be preset in the vehicle 100, and one of the plurality of modes may be selected as the working mode based on a user instruction or system default settings.

The audio signal is an audio signal obtained by the vehicle 100 when it is determined that the working mode of the vehicle 100 is the self-show mode. Specifically, the vehicle 100 may obtain the audio signal from music playing software of an in-vehicle entertainment system, may obtain the audio signal from an audio device communicatively connected to the vehicle 100, or may obtain the audio signal from music played by another electronic device in an environment, for example, collect, by using a microphone of the vehicle, music played by another electronic device in an environment.

Optionally, when the working mode of the vehicle 100 is the self-show mode, the vehicle 100 is stationary and is in a parking state. "Countdown" or "Start Immediately" is selected, the vehicle 100 is stationary, and the active suspension system 12 is controlled to perform the rhythmic action based on the frequency signal.

Optionally, when the working mode of the vehicle 100 is the self-show mode, and when the vehicle 100 dances, a gear is engaged in "Drive" and an accelerator pedal is depressed, and the active suspension system 12 is controlled to perform the rhythmic action at a specific frequency f1. The frequency f1 may be preset and stored.

When it is determined that the working mode of the vehicle 100 is the leading mode, the control method further includes: sending a following indication signal to a following vehicle 100, where the following indication signal includes at least one of the audio signal, the frequency signal, and the rhythmic action. In this way, the following vehicle 100 may follow the current vehicle to perform the rhythmic action.

Specifically, when the current vehicle is in the leading mode, the vehicle 100 is stationary and is in a parking state. A local area network is enabled and another vehicle 100 having a same configuration is detected. Another vehicle 100 is invited, encrypted pairing is performed after invitation succeeds, another vehicle 100 is the following vehicle 100 after pairing succeeds, "Countdown" or "Start Immediately" is selected, and the current vehicle sends the following indication signal to the following vehicle 100.

In an optional implementation, the current vehicle may send the following indication signal to the following vehicle 100, where the following indication signal includes the audio signal; and the active suspension system 12 of the following vehicle 100 may be controlled to perform the rhythmic action based on the frequency signal of the audio signal.

In an optional implementation, the current vehicle may send the following indication signal to the following vehicle 100, where the following indication signal includes the frequency signal; and the active suspension system 12 of the following vehicle 100 may be controlled to perform the rhythmic action based on the frequency signal.

In an optional implementation, the current vehicle may send the following indication signal to the following vehicle 100, where the following indication signal includes the rhythmic action; and the active suspension system 12 of the following vehicle 100 may be controlled to perform the rhythmic action.

In an optional implementation, the following indication signal includes two or three of the audio signal, the frequency signal, and the rhythmic action.

In some implementations, it is determined that the working mode of the vehicle 100 is the following mode, and the audio signal is an audio signal of a leading vehicle 100. In this way, the current vehicle may perform rhythmic movement with the audio signal of the leading vehicle 100.

Specifically, when the current vehicle is in the following mode, the vehicle 100 is stationary and is in a parking state. When the leading vehicle 100 sends an invitation, the current vehicle accepts the invitation and completes encrypted pairing, and receives the audio signal sent by the leading vehicle 100, and the active suspension system 12 of the current vehicle is controlled to perform the rhythmic action based on the audio signal.

The audio signal is an audio signal obtained by the vehicle 100 when it is determined that the working mode of the vehicle 100 is the lulling mode. Specifically, the vehicle 100 may obtain the audio signal from music playing software of an in-vehicle entertainment system, or may obtain the audio signal from an audio device communicatively connected to the vehicle 100.

When the working mode of the vehicle 100 is the lulling mode, the vehicle 100 is stationary and is in a parking state, and the active suspension system 12 is controlled to perform the rhythmic action at a specific frequency f2. The frequency f2 may be preset and stored.

When it is determined that the working mode of the vehicle 100 is the choreographing mode, the vehicle 100 is stationary and is in a parking mode, and choreographs an action sequence to form a choreographed plan, and "Countdown" or "Start Immediately" is selected to control the active suspension system 12 to perform the rhythmic action based on the choreographed plan. The choreographed plan may be formed by choreographing the action sequence by a user or may be formed by choreographing the action sequence by software of the vehicle 100. This is not specifically limited herein.

An implementation of this application provides an active suspension system 12, including at least one suspension structure 18, where the suspension structure 18 includes a motor 28 and a damper 24, the motor 28 is configured to adjust a rotation direction and a rotation speed based on a frequency signal, to enable the damper 24 to perform rhythmic movement with an audio signal, so that the active suspension system 12 performs a rhythmic action. In this way, the active suspension system 12 can perform the rhythmic action.

For related implementations in which the active suspension system 12 performs the rhythmic action, refer to the foregoing implementations of the control method. In this way, the active suspension system in this implementation of this application can select, as required, a proper first frequency interval as a basis for the rhythmic movement, thereby flexibly adapting to different scenario requirements or user requirements.

Specifically, the suspension structure 18 further includes an elastic element 20. The damper 24 and the elastic element 20 are connected between a vehicle body 14 and a wheel 16, and the damper 24 may be stretched and retracted. The motor 28 rotates in a first direction, so that the damper 24 is retracted. The damper 24 compresses the elastic element 20 by using the vehicle body 14 to lower the vehicle body 14, so that a press-down action is performed. When the motor 28 rotates in a second direction, the damper 24 is stretched. The damper 24 releases the elastic element 20 by using the vehicle body 14 to raise the vehicle body 14, so that a jump action is performed. The first direction is opposite to the second direction.

When the motor 28 drives the damper 24 at a high rotation speed (rotation speed), the damper 24 may be retracted to be shorter more quickly, or the damper 24 may be stretched to be longer more quickly. Because the damper 24 is retracted to be shorter more quickly, the elastic element 20 is compressed to be shorter more quickly. In this case, the elastic element 20 stores more elastic potential energy, and the vehicle body 14 can respond to lowering more quickly. Because the damper 24 is stretched to be longer more quickly, the elastic element 20 is released more quickly. In this case, the elastic potential energy is released more quickly, and the vehicle body 14 can respond to raising more quickly.

Therefore, the rotation direction and the rotation speed of the motor 28 are adjusted based on the frequency signal, to control a raising height and a raising speed of the vehicle body 14 and a lowering height and a lowering speed of the vehicle body 14, so that the damper 24 performs rhythmic movement with the audio signal, and the active suspension system 12 performs the rhythmic action.

In some implementations, the suspension structure 18 further includes a fluid pump 26, and the fluid pump 26 is configured to be driven by the motor 28 to actuate the damper 24, to enable the damper 24 to perform the rhythmic movement with the audio signal. In this way, the damper 24 can perform the rhythmic movement with the audio signal.

Specifically, the damper 24 has an upper cavity 36 and a lower cavity 38, the fluid pump 26 may be a two-way fluid pump 26, and a first port 40 and a second port 42 of the fluid pump 26 are respectively connected to the upper cavity 36 and the lower cavity 38 of the damper 24.

The motor 28 rotates in the first direction, to drive the fluid pump 26 to deliver a fluid from the lower cavity 38 to the upper cavity 36 through the second port 42 and the first port 40 sequentially, a piston assembly 34 is pressed down by a pressure of the fluid in the upper cavity 36, and the piston assembly 34 drives a piston rod 32 to move downward, so that the vehicle body 14 compresses the elastic element 20 downward, thereby reducing a height of the vehicle body 14 and performing a press-down action. The elastic element 20 is compressed to store elastic potential energy. The vehicle body 14 may be maintained at a current height.

The motor 28 rotates in the second direction, to drive the fluid pump 26 to deliver a fluid from the upper cavity 36 to the lower cavity 38 through the first port 40 and the second port 42 sequentially. The piston assembly 34 is pushed upward by a pressure of the fluid in the lower cavity 38, the piston assembly 34 drives the piston rod 32 to move upward, thereby accelerating the vehicle body 14 upward. The elastic potential energy stored by the elastic element 20 is released, so that the elastic element 20 accelerates the vehicle body 14 upward. Under the action of double acceleration of the damper 24 and the elastic element 20, the vehicle body 14 is driven upward, so that the height of the vehicle body 14 is increased and a jump action is performed. In addition, the vehicle body 14 may be maintained at a current height.

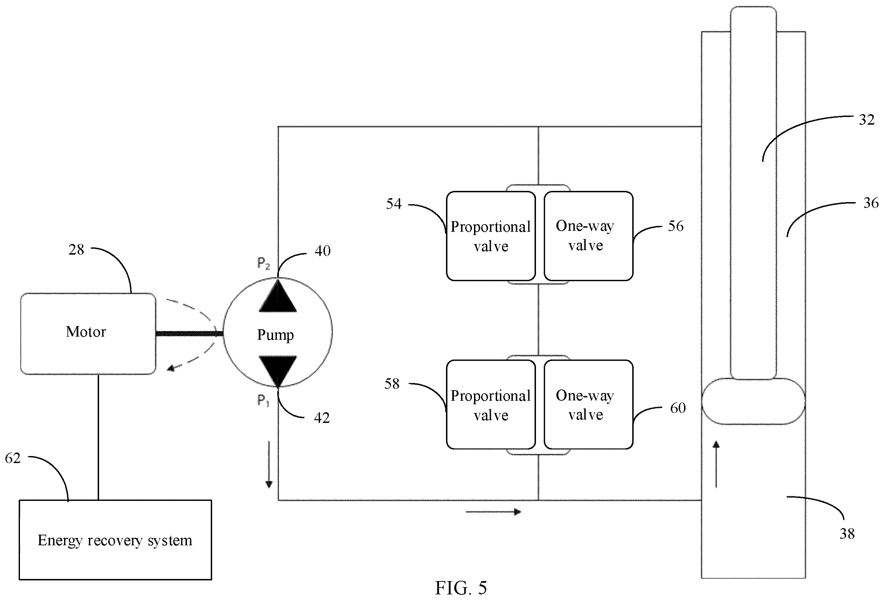

Refer to FIG. 4 and FIG. 5. In some implementations, the suspension structure 18 further includes a fluid branch 44, the fluid branch 44 is connected to a first flow path 46 and a second flow path 48, the first flow path 46 is a flow path between the first port 40 and the damper 24, and the second flow path 48 is a flow path between the second port 42 and the damper 24.

The fluid branch 44 includes a first adjustment assembly 50 and a second adjustment assembly 52 that are connected in series, the first adjustment assembly 50 can adjust a flow rate of a fluid delivered from the first flow path 46 to the second flow path 48, and the second adjustment assembly 52 can adjust a flow rate of a fluid delivered from the second flow path 48 to the first flow path 46.

In this way, a pressure during the rhythmic movement of the damper 24 can be ensured.

Specifically, the first adjustment assembly 50 can adjust the flow rate of the fluid delivered from the first flow path 46 to the second flow path 48, to adjust a flow rate of the fluid delivered from the upper cavity 36 to the lower cavity 38, to further adjust a pressure difference between the upper cavity 36 and the lower cavity 38, so that a support force applied to the vehicle body 14 when the damper 24 is stretched is adjusted. The second adjustment assembly 52 can adjust the flow rate of the fluid delivered from the second flow path 48 to the first flow path 46, to adjust a flow rate of the fluid delivered from the lower cavity 38 to the upper cavity 36, to further adjust a pressure difference between the upper cavity 36 and the lower cavity 38, so that a support force applied to the vehicle body 14 when the damper 24 is retracted is adjusted.

When dealing with a road condition with high-frequency vibration, the motor 28 does not work. The active suspension system 12 adjusts, by using the first adjustment assembly 50 and the second adjustment assembly 52, the support force applied by the damper 24 to the vehicle body 14, the fluid is delivered between the upper cavity 36 and the lower cavity 38 through the fluid branch 44, and the fluid does not pass through the fluid pump 26.

When dealing with a road condition with low-frequency vibration and performing the rhythmic movement with the audio signal, the motor 28 works. The first adjustment assembly 50 and the second adjustment assembly 52 minimize a flow rate of a fluid of the fluid branch 44, the fluid is delivered between the upper cavity 36 and the lower cavity 38 through the fluid pump 26, and the fluid does not pass through the fluid branch 44, thereby ensuring the pressure during the rhythmic movement of the damper 24.

In FIG. 4, the first adjustment assembly 50 includes a first proportional valve 54 and a first one-way valve 56 that are connected in parallel, and the second adjustment assembly 52 includes a second proportional valve 58 and a second one-way valve 60 that are connected in parallel. The first one-way valve 56 blocks delivery of the fluid from the first flow path 46 to the second flow path 48, and allows delivery of the fluid from the second flow path 48 to the first flow path 46. The second one-way valve 60 blocks delivery of the fluid from the second flow path 48 to the first flow path 46 and allows delivery of the fluid from the first flow path 46 to the second flow path 48. Specifically, when the motor 28 does not work and the damper 24 is stretched, the first proportional valve 54 is at a specific opening degree, the second proportional valve 58 is closed or at a minimum controllable opening degree, and the fluid in the upper cavity 36 is delivered to the lower cavity 38 through the first proportional valve 54 and the second one-way valve 60. When the damper 24 is retracted, the second proportional valve 58 is at a specific opening degree, the first proportional valve 54 is closed or at a minimum controllable opening degree, and the fluid in the lower cavity 38 is delivered to the upper cavity 36 through the second proportional valve 58 and the first one-way valve 56.

In some implementations, the active suspension system 12 includes a first suspension structure.

The rhythmic action includes a jump action of the first suspension structure. The jump action is implemented by enabling forward rotation of the motor 28, performing PID (proportional-integral-derivative control) adjustment based on a current relative height and a target jump height of the vehicle body, and adjusting opening degrees of the first adjustment assembly 50 and the second adjustment assembly 52 to be less than or equal to a first set value; and/or the rhythmic action includes a press-down action of the first suspension structure, and the press-down action is implemented by enabling reverse rotation of the motor 28, performing PID adjustment based on the current relative height and a target press-down height of the vehicle body, and adjusting the opening degrees of the first adjustment assembly 50 and the second adjustment assembly 52 to be less than or equal to a second set value. A relative height of the vehicle body is a height of the vehicle body 14 relative to a suspension lower swing arm.

Specifically, the first suspension structure may be any suspension structure 18 of a plurality of suspension structures 18.

When the first suspension structure performs the jump action, flow velocities of fluids that can pass through the first adjustment assembly 50 and the second adjustment assembly 52 are reduced to be below a first set flow velocity. The motor 28 performs forward rotation to deliver the fluid from the upper cavity 36 to the lower cavity 38. The damper 24 of the first suspension structure is stretched, and PID control is performed based on a difference between a current height of the vehicle body 14 and the target jump height to obtain a corresponding target rotation speed of the motor 28. When the motor 28 drives the fluid pump 26 at the target rotation speed to drive the fluid to enter the lower cavity 38 from the upper cavity 36 and a pressure P1 > a pressure P2, the piston rod 32 is pushed up to complete the jump action of the damper 24. P1 represents a pressure of the lower cavity 38, and P2 represents a pressure of the upper cavity 36. Specifically, opening degrees of the first proportional valve 54 and the second proportional valve 58 may be controlled below a first set opening degree, to reduce a flow velocity of the fluid in the fluid branch 44 to be below the first set flow velocity. The first set value may be but is not limited to any one of values such as 15%, 13%, 12%, 10%, 8%, 5%, 3%, 1%, and 0. The first set flow velocity may be a flow velocity greater than a zero flow velocity by a specific value or a flow velocity greater than a minimum flow velocity controllable by the first suspension structure by a specific value.

When the first suspension structure performs the press-down action, flow velocities of fluids that can pass through the first adjustment assembly 50 and the second adjustment assembly 52 are reduced to be below a second set flow velocity. The motor 28 performs reverse rotation to deliver the fluid from the lower cavity 38 to the upper cavity 36. The damper 24 of the first suspension structure is retracted, and PID control is performed based on a difference between the current height of the vehicle body 14 and the target press-down height to obtain a corresponding target rotation speed of the motor 28. When the motor 28 drives the fluid pump 26 at the target rotation speed to drive the fluid to enter the upper cavity 36 from the lower cavity 38 and a pressure P2 > a pressure P1, the piston rod 32 is pressed down to complete the press-down action of the damper 24. Specifically, opening degrees of the first proportional valve 54 and the second proportional valve 58 may be controlled below a second set opening degree, to reduce a flow velocity of the fluid in the fluid branch 44 to be below the second set flow velocity. The second set opening degree may be but is not limited to any one of values such as 15%, 13%, 12%, 10%, 8%, 5%, 3%, 1%, and 0. The second set flow velocity may be a flow velocity greater than a zero flow velocity by a specific value or a flow velocity greater than a minimum flow velocity controllable by the first suspension structure by a specific value.

The first set opening degree and the second set opening degree may be the same, or may be different.

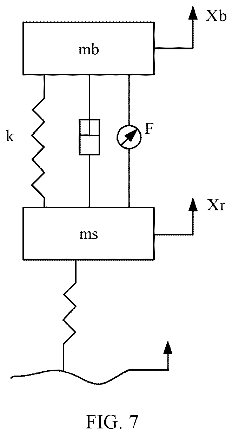

Refer to FIG. 7. In an implementation, a target height H of the vehicle body 14 (including the target jump height and the target press-down height) may be determined according to the following formulas:

$$H = \left(\dot{X}_b - \dot{X}_r\right) * t = V_p * n_m * (P_1 - P_2) * \frac{t}{F} = \int_0^t n_m * (P_1 - P_2) * V_p/F \, dt \quad (1)$$

$$F = (m_b * \ddot{X}_b + k * X_b)/\left(\dot{X}_b - \dot{X}_r\right) \quad (2)$$

mb is a mass of the vehicle body, Xb is a displacement of the vehicle body, k is stiffness of the elastic element 20, Xr is the unsprung displacement, F is an active force applied to the elastic element 20 by the damper 24, Vp is a delivery capacity of the fluid pump 26, nm is the rotation speed of the motor 28, P1 is the pressure of the lower cavity 38, P2 is the pressure of the upper cavity 36, H is the target height, and t is a time. In FIG. 7, ms is the unsprung mass, and the pressure P1 of the lower cavity 38 and the pressure P2 of the upper cavity 36 each may be detected by a sensor in a flow path.

It may be understood that a calculation manner of the target height in this application is not limited to the foregoing calculation manner. In this application, a suspension system model in a related technology may alternatively be used to calculate the target height.

In some implementations, the motor 28 of the active suspension system 12 is electrically connected to an energy recovery system 62, and the energy recovery system 62 is configured to perform energy recovery when a reduction gradient of a target rotation speed of the motor 28 is greater than an actual reduction gradient.

In this way, energy recovery can be implemented during the rhythmic movement of the damper 24.

Specifically, in a process of performing the rhythmic action, the vehicle body 14 jumps and is pressed down. The rotation speed of the motor 28 changes, and the motor 28 is electrically connected to the energy recovery system 62, so that electric energy generated during power generation of the motor 28 can be recovered by the energy recovery system 62, and a power battery or another energy storage battery of the vehicle 100 can be charged.

In an implementation, when the first suspension structure performs the jump action, the motor 28 may correspondingly enter a rotation speed mode. A motor controller may monitor the difference between the current height of the vehicle body 14 corresponding to the damper 24 and the target jump height, and perform PID control to obtain the corresponding target rotation speed of the motor 28 (first target rotation speed). The motor 28 drives the fluid pump 26 at the first target rotation speed to drive the fluid to enter the lower cavity 38 from the upper cavity 36 and the pressure P1 > the pressure P2, so that the piston rod 32 is raised to complete the jump action of the first suspension structure. When the vehicle body 14 is restored to a height before the first suspension structure performs the jump action, the current rotation speed of the motor 28 needs to be reduced to a second target rotation speed. When a reduction gradient of the second target rotation speed of the motor 28 is greater than the actual reduction gradient, the motor 28 generates electric energy, and the energy recovery system 62 may recover the electric energy generated by the motor 28 to implement energy recovery.

When the press-down action of the first suspension structure needs to be performed, corresponding reverse rotation of the motor 28 is requested.

In the active suspension system 12 in this implementation of this application, a control process of the suspension structure 18 may be implemented by using a built-in control module of the motor 28 in a possible implementation; in another possible implementation, a control module may be configured for the active suspension system 12 to control a related process of implementing the foregoing control method; and in still another possible implementation, each suspension structure 18 of the active suspension system 12 may be controlled by using a controller of the vehicle 100.

An implementation of this application provides a suspension control apparatus 64, including a controller 66, where the controller 66 is configured to be electrically connected to an active suspension system 12, and the controller 66 is configured to implement the steps of the control method in any one of the foregoing implementations.

Specifically, the suspension control apparatus 64 may be mounted on a vehicle body 14, and the controller 66 may be electrically connected to a motor controller.

An implementation of this application provides a vehicle 100, including the active suspension system 12 in any one of the foregoing implementations and/or the suspension control apparatus 64 in the foregoing implementation.

Specifically, the vehicle 100 includes but is not limited to a battery electric vehicle, a hybrid electric vehicle, and an extended-range electric vehicle.

The suspension control apparatus 64 and the vehicle 100 can use the active suspension system 12 to enable the vehicle 100 to perform rhythmic movement with music, thereby meeting more personalized entertainment requirements of a user, and improving user experience.

In an implementation, the vehicle 100 includes the active suspension system 12 and the suspension control apparatus 64, and a controller 66 is electrically connected to the active suspension system 12. The controller 66 may control the active suspension system 12 to implement the steps of the control method in any one of the foregoing implementations.

In an implementation, the vehicle 100 includes the active suspension system 12. A motor 28 of the active suspension system 12 is configured to adjust a rotation direction and a rotation speed based on an audio signal, to enable a damper 24 to perform rhythmic movement with the audio signal.

In an implementation, the vehicle 100 includes the suspension control apparatus 64, and a controller 66 may implement the steps of the control method in any one of the foregoing implementations.

It should be noted that the foregoing descriptions of the implementations and the beneficial effects of the control method are also applicable to the suspension control apparatus 64 and the vehicle 100 in this implementation. To avoid redundancy, details are not described herein again.

It may be understood that a computer program includes computer program code. The computer program code may be in a source code form, an object code form, an executable file form, some intermediate forms, or the like. The computer-readable storage medium may include any entity or apparatus that can carry computer program code, a recording medium, a USB flash drive, a removable hard disk, a magnetic disk, an optical disc, a computer memory, a read-only memory (ROM, Read-Only Memory), a random access memory (RAM, Random Access Memory), a software distribution medium, and the like. The processor may be a central processing unit, or may be another general-purpose processor, a digital signal processor (Digital Signal Processor, DSP), an application-specific integrated circuit (Application Specific Integrated Circuit, ASIC), a field-programmable gate array (Field-Programmable Gate Array, FPGA) or another programmable logic device, a discrete gate or transistor logic device, a discrete hardware component, or the like.

In the description of this specification, reference to descriptions of terms such as "one implementation", "some implementations", "exemplary implementation", "example", "specific example", and "some examples" means that specific characteristics, structures, materials, or features described with reference to an implementation or an example is included in at least one implementation or example of this application. In this specification, illustrative expressions of the foregoing terms do not necessarily refer to a same implementation or example. Further, the specific characteristics, structures, materials, or features described may be combined in an appropriate manner in any one or more of the implementations or examples.

Although the implementations of this application have been shown and described, a person of ordinary skill in the art may understand that various changes, modifications, replacements, and variations may be made to these implementations without departing from the principles and purposes of this application, and a scope of this application is defined by the claims and equivalents thereof.

## Claims

1. A control method for a vehicle, comprising:

    obtaining a frequency signal within a first frequency interval of an audio signal; and
    controlling an active suspension system of the vehicle to perform a rhythmic action based on the frequency signal.

2. The method according to claim 1, wherein controlling the active suspension system of the vehicle to perform the rhythmic action based on the frequency signal comprises:
   controlling the active suspension system of the vehicle to perform the rhythmic action based on an amplitude of the frequency signal.

3. The method according to claim 2, wherein an action type of the rhythmic action is one or more of a single-wheel rhythmic action, a single-side rhythmic action, a dual-side rhythmic action, a diagonal rhythmic action, and an all-wheel rhythmic action.

4. The method according to claim 3, wherein the action type of the rhythmic action is determined based on an amplitude level of the frequency signal.

5. The method according to claim 4, wherein the frequency signal comprises a plurality of frequency bands, and the amplitude level is determined based on an amplitude of each of the plurality of frequency bands.

6. The method according to any one of claims 3 to 5, wherein the active suspension system comprises a plurality of suspension structures;

> the single-wheel rhythmic action means that one of the plurality of suspension structures performs the rhythmic action;
> the single-side rhythmic action means that suspension structures of the plurality of suspension structures that are located on a same side perform the rhythmic action;
> the dual-side rhythmic action means that suspension structures located on a first side and suspension structures located on a second side in the plurality of suspension structures alternately perform the rhythmic action;
> the diagonal rhythmic action means that suspension structures of the plurality of suspension structures that are located at diagonal positions perform the rhythmic action; and
> the all-wheel rhythmic action means that the plurality of suspension structures concurrently perform the rhythmic action.

7. The method according to any one of claims 1 to 6, wherein the frequency signal comprises a plurality of frequency bands, and the rhythmic action comprises a rhythmic sub-action corresponding to each of the plurality of frequency bands.

8. The method according to claim 7, wherein the plurality of frequency bands comprise a first frequency band, and a first rhythmic sub-action corresponding to the first frequency band is determined based on one or more of an amplitude of the first frequency band, a frequency of the first frequency band, and a drumbeat position of the first frequency band.

9. The method according to claim 8, wherein an action parameter of the first rhythmic sub-action comprises one or more of a vibration height, a vibration frequency, and a rhythmic action sequence.

10. The method according to any one of claims 1 to 9, wherein the method further comprises:
    determining a working mode of the vehicle.

11. The method according to claim 10, wherein the working mode comprises one of a self-show mode, a leading mode, a following mode, a lulling mode, and a choreographing mode.

12. The method according to claim 11, wherein the audio signal is an audio signal obtained by the vehicle when it is determined that the working mode of the vehicle is the self-show mode.

13. The method according to claim 11, wherein when it is determined that the working mode of the vehicle is the leading mode, the method further comprises:
    sending a following indication signal to a following vehicle, wherein the following indication signal comprises at least one of the audio signal, the frequency signal, and the rhythmic action.

14. The method according to claim 11, wherein the audio signal is an audio signal of a leading vehicle when it is determined that the working mode of the vehicle is the following mode.

15. The method according to any one of claims 1 to 14, wherein the active suspension system comprises at least one suspension structure, the suspension structure comprises a motor and a damper, and the motor is configured to adjust a rotation direction and a rotation speed based on the frequency signal, to enable the damper to perform rhythmic movement with the audio signal, so that the active suspension system performs the rhythmic action.

16. The method according to claim 15, wherein the suspension structure further comprises a fluid pump, and the fluid pump is configured to be driven by the motor to actuate the damper, to enable the damper to perform the rhythmic movement with the audio signal.

17. The method according to claim 16, wherein a first port and a second port of the fluid pump are respectively connected to an upper cavity and a lower cavity of the damper.

18. The method according to claim 17, wherein the suspension structure further comprises a fluid branch, the fluid branch is connected to a first flow path and a second flow path, the first flow path is a flow path between the first port and the damper, and the second flow path is a flow path between the second port and the damper; and
    the fluid branch comprises a first adjustment assembly and a second adjustment assembly that are connected in series, the first adjustment assembly is capable of adjusting a flow rate of a fluid delivered from the first flow path to the second flow path, and the second adjustment assembly is capable of adjusting a flow rate of a fluid delivered from the second flow path to the first flow path.

19. The method according to claim 18, wherein the active suspension system comprises a first suspension structure;

the rhythmic action comprises a jump action of the first suspension structure, and the jump action is implemented by enabling forward rotation of the motor, performing PID, proportional-integral-derivative control, adjustment based on a current height and a target jump height of a vehicle body, and reducing flow velocities of fluids that are capable of passing through the first adjustment assembly and the second adjustment assembly to be below a first set flow velocity; and/or
the rhythmic action comprises a press-down action of the first suspension structure, and the press-down action is implemented by enabling reverse rotation of the motor, performing PID adjustment based on a current height and a target press-down height of a vehicle body, and reducing flow velocities of fluids that are capable of passing through the first adjustment assembly and the second adjustment assembly to be below a second set flow velocity.

20. The method according to any one of claims 14 to 19, wherein the motor of the active suspension system is electrically connected to an energy recovery system, and the energy recovery system is configured to perform energy recovery when a reduction gradient of a target rotation speed of the motor is greater than an actual reduction gradient.

21. An active suspension system, comprising at least one suspension structure, wherein the suspension structure comprises a motor and a damper, and the motor is configured to adjust a rotation direction and a rotation speed based on an audio signal, to enable the damper to perform rhythmic movement with the audio signal.

22. The active suspension system according to claim 21, wherein the suspension structure further comprises a fluid pump, the motor is connected to the fluid pump, the fluid pump is connected to the damper, and the fluid pump is configured to be driven by the motor to actuate the damper, to enable the damper to perform the rhythmic movement with the audio signal.

23. The active suspension system according to claim 22, wherein a first port and a second port of the fluid pump are respectively in communication with an upper cavity and a lower cavity of the damper.

24. The active suspension system according to claim 23, wherein the suspension structure further comprises a fluid branch, the fluid branch is connected to a first flow path and a second flow path, the first flow path is a flow path between the first port of the fluid pump and the damper, and the second flow path is a flow path between the second port of the fluid pump and the damper; and
the fluid branch comprises a first adjustment assembly and a second adjustment assembly that are connected in series, the first adjustment assembly is capable of adjusting a flow rate of a fluid delivered from the first flow path to the second flow path, and the second adjustment assembly is capable of adjusting a flow rate of a fluid delivered from the second flow path to the first flow path.

25. The active suspension system according to claim 24, wherein the first adjustment assembly comprises a first proportional valve and a first one-way valve that are connected in parallel;

the second adjustment assembly comprises a second proportional valve and a second one-way valve that are connected in parallel;
the first one-way valve blocks delivery of the fluid from the first flow path to the second flow path and allows delivery of the fluid from the second flow path to the first flow path; and
the second one-way valve blocks delivery of the fluid from the second flow path to the first flow path and allows delivery of the fluid from the first flow path to the second flow path.

26. The active suspension system according to any one of claims 21 to 25, wherein a rhythmic action of the damper is determined based on a frequency signal within a first frequency interval of the audio signal.

27. The active suspension system according to claim 26, wherein the frequency signal comprises a plurality of frequency bands, and the rhythmic action comprises a rhythmic sub-action corresponding to each of the plurality of frequency bands.

28. The active suspension system according to claim 27, wherein the plurality of frequency bands comprise a first frequency band, and a first rhythmic sub-action corresponding to the first frequency band is determined based on one or more of an amplitude of the first frequency band, a frequency of the first frequency band, and a drumbeat position of the first frequency band.

29. The active suspension system according to claim 28, wherein an action parameter of the first rhythmic sub-action comprises one or more of a vibration height, a vibration frequency, and a rhythmic action sequence.

30. The active suspension system according to any one of claims 21 to 29, wherein an action type of the rhythmic action comprises one or more of a single-wheel rhythmic action, a single-side rhythmic action, a dual-side rhythmic action, a diagonal rhythmic action, and an all-wheel rhythmic action;

the single-wheel rhythmic action means that one of a plurality of suspension structures performs a jump action and/or a press-down action;
the single-side rhythmic action means that suspension structures of the plurality of suspension structures that are located on a same side perform the jump action and/or the press-down action;
the dual-side rhythmic action means that suspension structures located on a first side and suspension structures located on a second side in the plurality of suspension structures alternately perform the jump action and/or the press-down action; and
the all-wheel rhythmic action means that the plurality of suspension structures concurrently perform the jump action and/or the press-down action.

31. The active suspension system according to claim 30, wherein the action type of the rhythmic action is determined based on an amplitude level of the frequency signal.

32. The active suspension system according to claim 31, wherein the amplitude level is determined based on an amplitude of each of the plurality of frequency bands.

33. The active suspension system according to any one of claims 30 to 32, wherein the jump action is implemented by enabling forward rotation of the motor, performing PID adjustment based on a current relative height and a target jump height of a vehicle body, and adjusting opening degrees of the first adjustment assembly and the second adjustment assembly to be less than or equal to a first set value; and
the press-down action is implemented by enabling reverse rotation of the motor, performing PID adjustment based on the current relative height and a target press-down height of the vehicle body, and adjusting the opening degrees of the first adjustment assembly and the second adjustment assembly to be less than or equal to a second set value.

34. The active suspension system according to any one of claims 21 to 33, wherein the motor is connected to an energy recovery system of a vehicle, and the energy recovery system is configured to perform energy recovery when a reduction gradient of a target rotation speed of the motor is greater than an actual reduction gradient.

35. A suspension control apparatus, comprising a controller, wherein the controller is configured to be electrically connected to an active suspension system, and the controller is configured to implement the steps of the control method according to any one of claims 1 to 20.

36. A vehicle, comprising the active suspension system according to any one of claims 21 to 34 and/or the suspension control apparatus according to claim 35.

101 ⎯ | Obtain a frequency signal within a first frequency interval of an audio signal

103 ⎯ | Control an active suspension system of a vehicle to perform a rhythmic action based on the frequency signal

FIG. 1

100

FIG. 2

FIG. 3

FIG. 4

EP 4 691 809 A1

FIG. 5

Left ◀——————▶ Right

16 ——

16 ——

14 ——

16 ——

Front

↕

Rear

—— 16

—— 16

FIG. 6

FIG. 7

## INTERNATIONAL SEARCH REPORT

| International application No. |
|---|
| **PCT/CN2024/075567** |

| A. | CLASSIFICATION OF SUBJECT MATTER |
|---|---|

B60G 17/015(2006.01)i

According to International Patent Classification (IPC) or to both national classification and IPC

| B. | FIELDS SEARCHED |
|---|---|

Minimum documentation searched (classification system followed by classification symbols)

IPC:B60G

Documentation searched other than minimum documentation to the extent that such documents are included in the fields searched

Electronic data base consulted during the international search (name of data base and, where practicable, search terms used)

CNTXT: CNABS; ENTXTC; VEN; CNKI: 车辆, 悬架, 音乐, 频率, 控制, 振幅, vehicles, suspensions, music, frequency, control, amplitude

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110053441 A (HUMAN HORIZONS (JIANGSU) TECHNOLOGY CO., LTD.) 26 July 2019 (2019-07-26)<br>description, paragraphs 4-131, and figures 1-6 | 1-36 |
| A | CN 113997743 A (GREE ELECTRIC APPLIANCES INC. OF ZHUHAI) 01 February 2022 (2022-02-01)<br>entire document | 1-36 |
| A | CN 115002604 A (CHINA FAW GROUP CORPORATION) 02 September 2022 (2022-09-02)<br>entire document | 1-36 |
| A | CN 115755684 A (ZHEJIANG JIKE INTELLIGENT TECHNOLOGY CO., LTD.) 07 March 2023 (2023-03-07)<br>entire document | 1-36 |
| A | US 11247596 B1 (HYUNDAI MOTOR CO., LTD. et al.) 15 February 2022 (2022-02-15)<br>entire document | 1-36 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2024** | **11 April 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075567**

| Patent document cited in search report | | | Publication date (day/month/year) | Patent family member(s) | | | Publication date (day/month/year) |
|---|---|---|---|---|---|---|---|
| CN | 110053441 | A | 26 July 2019 | None | | | |
| CN | 113997743 | A | 01 February 2022 | None | | | |
| CN | 115002604 | A | 02 September 2022 | None | | | |
| CN | 115755684 | A | 07 March 2023 | None | | | |
| US | 11247596 | B1 | 15 February 2022 | KR | 20220033819 | A | 17 March 2022 |
| | | | | DE | 102021102758 | A1 | 10 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023103840486